# EUROPÄISCHE PATENTSCHRIFT

(11) **EP 0 919 131 B1**
(45) Veröffentlichungstag und Bekanntmachung des Hinweises auf die Patenterteilung: **28.04.2004**
(21) Anmeldenummer: 98122018.9
(22) Anmeldetag: 20.11.1998
(51) Int. Cl.: A21D 2/00, A21D 8/04, A23P 1/02

(54) **Kompaktierung von Backmitteln**
Compaction of dough conditioners
Compactage d'améliorants

(30) Priorität: 28.11.1997 DE 19752832
(43) Veröffentlichungstag der Anmeldung: 02.06.1999
(73) Patentinhaber: Cognis Deutchland GmbH & Co. KG, 40589 Düsseldorf (DE)
(72) Erfinder: Kniel, Bärbel Prof., 89231 Neu-Ulm (DE); Rochau, Bernd Dr., 89231 Neu-Ulm (DE); Geywitz, Peter Dr., 89079 Ulm (DE); Horlacher, Peter Dr., 89079 Ulm (DE); Sander, Andreas Dr., 89257 Illertissen (DE); Adams, Wolfgang, 88074 Meckenbeuren (DE); Gölitz, Hartmut, 87787 Wolfertsschwenden (DE); Funke, Andreas, 89165 Dietenheim (DE)

(56) Entgegenhaltungen:
- EP-A- 0 650 669
- EP-A- 0 676 142
- EP-A- 0 876 763
- DE-A- 2 834 851
- FR-A- 2 315 852
- FR-A- 2 698 761

## Beschreibung

### Gebiet der Erfindung

Die Erfindung betrifft ein Kompaktierungsverfahren zur Herstellung stückiger Backmittel.

### Stand der Technik

Bei der Herstellung von Backwaren werden heutzutage oftmals Mischungen von Backzutaten verwendet, die meist als Halbfabrikate einem anderen Stoffgemisch zugeführt und dann weiterverarbeitet werden. Derartige Backmittel erleichtem die Arbeit und führen zu einer höheren Produktionssicherheit, da die jeweiligen Wiege- und Mischarbeiten entfallen.

Bei Backmitteln wird nach der Dosiermenge unterschieden zwischen sogenannten klassischen Backmitteln (0,2 bis 10 Gew.-% bezogen auf Mehl), Vormischungen ("Premix" mit 10 bis 50 Gew.-% bezogen auf Mehl) und Fertig- oder Komplettmischungen. Während die Vor- und Fertigmischungen nur als Feststoffe gehandelt werden, sind bei den klassischen Backmitteln auch pastöse Produkte im Handel, die jedoch Nachteile in der Handhabung und der Haltbarkeit zeigen, und daher weniger bevorzugt sind.

Die pulverförmigen Zubereitungen werden üblicherweise in großen Gebinden gelagert, aus denen die erforderlichen Mengen jeweils entnommen werden können. Sie umfassen im allgemeinen Grobstoffe, die beispielsweise partikelartig und insbesondere kömig oder stückig sein können, sowie Feinstoffe und Zutaten, die u.a. die Verarbeitungsfähigkeit des herzustellenden Endproduktes fördern, die Haltbarkeit der Backwaren verbessern, die Geschmacksvielfalt erweitem und dergleichen. Wegen der zum Teil sehr unterschiedlichen Teilchengröße und des sehr unterschiedlichen spezifischen Gewichtes der einzelnen Bestandteile der Mischung kann es jedoch leicht zu einer Entmischung der Grob- und der Feinstoffe bzw. Zutaten kommen. Beispielsweise können sich Feinstoffe mit sehr kleinen Partikelgrößen oder einem hohen spezifischen Gewicht im Bevorratungsbehältnis unten ablagern, wogegen Bestandteile mit geringem spezifischen Gewicht eher im oberen Bereich des Behältnisses zu finden sein werden. Es ist sofort klar, dass eine genaue Dosierung von Grobstoffen und Feinstoffen bzw. Zutaten eines aus der Mischung bestehenden und zumindest teilweise entmischten Backmittels nicht oder zumindest nur noch eingeschränkt möglich ist.

In der Praxis hat es daher nicht an Versuchen gemangelt, diesem Problem abzuhelfen. Als einfachste Möglichkeit bietet sich an, die festen Zubereitungen zu vermahlen und ein Pulver mit einer einheitlich geringen Korngröße herzustellen. Dies hat jedoch den Nachteil, dass die Produkte bei der Verarbeitung, insbesondere beim Einfüllen in den Kneter stauben und potentiell allergene Stoffe, wie z.B. Mehl und vor allem Enzyme, in die Raumluft gelangen. Insbesondere lungengängige Stäube mit einer Partikelgröße < 10 µm können bei häufigem Kontakt zu Atemwegserkrankungen ("Bäckerasthma") führen. So sind Feinstäube von Mehlen, Enzympräparaten, Malz- und Sojaerzeugnissen dafür bekannt, dass sie Inhalationsallergien bei entsprechend disponierten Personen auslösen können.

Eine bekannte und praktizierte Maßnahme zur Entstaubung von Backmitteln besteht darin, während der Herstellung der Pulver die Stäube durch Zugabe von Fetten oder Lecithinen zu binden. Die Produkte weisen aber andererseits wieder den Nachteil auf, dass sie nicht ausreichend riesel-, dosier- und silierfähig sind. Diese Lösung ist also nicht zufriedenstellend. Auch Lösungen, die eine Kompaktierung einzelner Bestandteile der Backmischung vorschlagen, wie z.B. in **Food Processing 52 (1992)** für Enzyme vorgeschlagen oder in der deutschen Offenlegungschrift **DE 28 34 851** als Granulierung einer Lecithin - Zubereitung beschrieben, haben den erheblichen Nachteil, dass die notwendige Durchmischung mit den anderen Bestandteilen des Backmittels nicht gegeben ist, bzw. es dabei wieder zur Staubentwicklung kommen kann. Die Europäische Patentanmeldung **EP 0 876 763** offenbart als Lösung die Herstellung von Backzubereitungen durch Extrusion (Dokument gemäß Art. 54(3) EPÜ).

Die Aufgabe der Erfindung hat somit darin bestanden, ausgehend von wasserfreien oder praktisch wasserfreien Rohstoffen ein Verfahren zur Herstellung von Backmitteln zur Verfügung zu stellen, das sich dadurch auszeichnet, dass die Backmittel in fester Form vorliegen, eine enge Komgrößenverteilung aufweisen, nicht stauben, nicht klumpen, ausreichend lagerstabil sind und im Vergleich mit Handelsprodukten zumindest gleichwertige anwendungstechnische Eigenschaften aufweisen, sich insbesondere leicht im Teig lösen. Zudem sollte das Verfahren die Möglichkeit mitbeinhalten, temperaturlabile Komponenten, wie beispielsweise Enzyme, Oxidationsmittel, Kohlenhydrate, Reduktionsmittel, Kleber und dergleichen direkt mitzuverwenden.

### Beschreibung der Erfindung

Gegenstand der Erfindung ist ein Verfahren zur Herstellung granulierter Backmittel, bei dem man Backrohstoffe mit einer Restfeuchte von weniger als 20 Gew.-% durch Kompaktierung in stückige Zubereitungen überführt, die
(a) 1 bis 90 Gew.-% Mehl bzw. kohlenhydrathaltige Rohstoffe,
(b) 0,05 bis 50 Gew.-% Emulgatoren,
(c) 0,5 bis 40 Gew.-% proteinhaltige Rohstoffe,
(d) 0,01 bis 5 Gew.-% Enzyme,
(e) 0,05 bis 5 Gew.-% Oxidationsmittel ,
(f) 0,05 bis 5 Gew.-% Konservierungsmittel,
(g) 0 bis 25 Gew.-% Lösungs- undl oder Netzmittel,
(h) 0 bis 35 Gew.-% Milcherzeugnisse,
(i) 0 bis 20 Gew.-% pflanzlicher und/oder tierischer Fette,
(j) 0 bis 10 Gew.-% Säuren,
(k) 0 bis 20 Gew.-% Füll-, Trenn- und Sprengmittel,
sowie gegebenenfalls weitere Hilfs- und Zusatzstoffe mit der Maßgabe enthalten, dass sich die Gewichtsanteile zu 100 Gew.-% ergänzen.
Vorzugsweise weisen die stückigen Zubereitungen eine Teilchengrößenverteilung im Bereich 0,5 bis 5 mm auf.

Überraschenderweise wurde gefunden, dass die nach dem erfindungsgemäßen Verfahren erhältlichen granularen Backmittel nicht nur eine sehr homogene Größenverteilung zeigen und praktisch staubfrei sind, sondern auch hinsichtlich Lagerstabilität, Wasseraufnahmevermögen, Rieselfähigkeit und insbesondere der anwendungstechnischen Eigenschaften wie beispielsweise der Löslichkeit im Teig, mindestens ebenso gut sind wie vergleichbare pulverförmige Produkte des Handels. Die Erfindung schließt die Erkenntnis ein, dass das Kompaktierverfahren auch die Mitverwendung von temperaturlabilen Stoffen ermöglicht, so dass ein nachträgliches Zudosieren nicht mehr erforderlich ist.

### Backrohstoffe

Die erfindungsgemäßen Backmittel setzen sich aus einer Substanz (A), bei der es sich vorzugsweise um ein Enzym handelt und einer Substanz (B) ausgewählt aus der Gruppe, die gebildet wird von Emulgatoren, Oxidationsmitteln, Kohlenhydraten und Konservierungsmitteln zusammen. Daneben können jedoch weitere Inhaltsstoffe, wie sie im folgenden aufgeführt sind, eingesetzt werden.

Beispiele für geeignete Emulgatoren, die man typisch in Mengen von 0,05 bis 50, vorzugsweise 0,1 bis 30, insbesondere 2 bis 15 Gew.-% einsetzt, sind:
(a) Ester der Diacetylweinsäure mit Fettalkoholen mit 6 bis 22, vorzugsweise 12 bis 18 Kohlenstoffatomen, wie beispielsweise Diacetylweinsäurestearylester, aber auch gemischte Ester der Wein- und Essigsäure;
(b) Acyllactate in Form ihrer Alkali- und/oder Erdalkalisalze, wie beispielsweise Natrium- oder Calciumstearoyllactylat,
(c) Polysorbate, also Anlagerungsprodukte von 1 bis 20 Mol Ethylenoxid an Sorbitanmono-, -sesqui-, -di-, und/oder -triester auf Basis von Fettsäuren mit 6 bis 22, vorzugsweise 12 bis 18 Kohlenstoff-atomen, wie beispielsweise Addukte von 5 bis 15 Mol Ethylenoxid an Sorbitanmonolaurat, Sorbitandipalmitat, Sorbitantristearat, Sorbitanmonooleat und dergleichen;
(e) Mono- und Diglyceride sowie deren technische Gemische auf Basis von Fettsäuren mit 6 bis 22, vorzugsweise 12 bis 18 Kohlenstoffatomen, wie beispielsweise Laurinsäuremonoglycerid, Palmitinsäuremonoglycerid, Sterarinsäuremonoglycerid oder Ölsäuremonoglycerid sowie deren Anlagerungsproduke mit 1 bis 20, vorzugsweise 5 bis 10 Mol Ethylenoxid;
(f) Lecithine.

Gebräuchliche Oxidationsmittel, die im Sinne der Erfindung typischerweise in Mengen von 0,05 bis 5, vorzugsweise 0,2 bis 1 Gew.-% eingesetzt werden, sind Ascorbinsäure, Azodicarbonamid, Cystein, Cy-stin, Glutathion, Bromate, lodate und dergleichen. Als Enzyme können z.B. Lipasen, Amylasen, Hemicellulasen (z.B. Pentosanasen, Cellulasen, Pektinasen), Proteasen, Galactomannasen, Oxidoreductasen und/oder Glucoseoxidasen eingesetzt werden, wobei sich deren Einsatzmenge, beispielsweise 0,01 bis 5 Gew.-%, nach deren Aktivität richtet. Femer können die Backmittel **Kohlenhydrate** (z.B. Saccharose, Glucose, Fructose, Lactose, Dextrine, Maltodextrine, Zuckeralkohole), Malzstoffe (z.B. Malzmehle, Malzextrakte), Hefenahrung, Sojaerzeugnisse (z.B. Sojamehle, Sojaproteine), Stärken (z.B. Weizenstärke, Maisstärke, Kartoffelstärke), **Verdickungsmittel** und Hydrokolloide (z.B. Guarkemmehl, Getreidequellmehle, Johannisbrotkemmehl, CMC, Xanthan, Alginat etc.), **Milcherzeugnisse** (z.B. Magermilchpulver, Vollmilchpulver, Molkenpulver, Caseine), **Salze** (z.B. Acetate, Citrate, Carbonate, Sulfate, Phosphate) Säuren (z.B. Milchsäure, Citronensäure, Weinsäure, Äpfelsäure, Essigsäure), pflanz-liche und tierische **Fette, Füll-, Trenn- und Sprengmittel** (z.B. Magnesiumoxid, mikrokristalline Cellulose, Methylcellulose, Calciumstearate, Polyglycole, Kieselsäure), **Lösungs- und Netzmittel** (z.B. Polyethylenglycolmonostearat, Saccharosemonopalmitat und -stearat, Cetylalkohol, Fettalkoholsulfate), **Konservierungsstoffe** (z.B. Sorbate, Propionate) und dergleichen enthalten.

Typische Rohstoffmischungen für die Herstellung der Backmittel nach dem erfindungsgemäßen Verfahren weisen daher folgende Zusammensetzung auf:
(a) 1 bis 90, vorzugsweise 20 bis 80 und insbesondere 30 bis 50 Gew.-% Mehl bzw. kohlenhydrat-haltige Rohstoffe (z.B. Weizen, Roggen, Malz, Guar, Hydrokolloide, Zucker, Dextrose oder Saccharose)
(b) 0,05 bis 50, vorzugsweise 0,1 bis 30, insbesondere 2 bis 15 Gew.-% Emulgatoren,
(c) 0,5 bis 40, vorzugsweise 1 bis 20, proteinhaltige Rohstoffe (z.B. Weizenkleber oder Soja),
(d) 0,01 bis 5, vorzugsweise 0,5 bis 2 Gew.-% Enzyme,
(e) 0,05 bis 5, vorzugsweise 0,2 bis 1 Gew.-% Oxidationsmittel ,
(f) 0,05 bis 5, vorzugsweise 0,5 bis 1 Gew.-% Konservierungsmittel ,
(g) 0 bis 25, vorzugsweise 3 bis 15 Gew.-% Lösungs- und/ oder Netzmittel,
(h) 0 bis 35, vorzugsweise 5 bis 25 Gew.-% Milcherzeugnisse,
(i) 0 bis 20, vorzugsweise 2 bis 15 Gew.-% pflanzlicher und/ oder tierischer Fette,
(j) 0 bis 10, vorzugsweise 1bis 5 Gew.-% Säuren,
(k) 0 bis 20, vorzugsweise 3 bis 12 Gew.-% Füll-, Trenn- und Sprengmittel,
sowie gegebenenfalls weitere Hilfs- und Zusatzstoffe, mit der Maßgabe, dass sich die Gewichtsanteile zu 100 Gew.-% ergänzen.

Die Backrohstoffe sollen "praktisch wasserfrei" sein, das heißt, dass die Ausgangsstoffe eine Restfeuchte von weniger als 20, vorzugsweise weniger als 10 Gew.-% aufweisen.

### Kompaktierung

Bei der Kompaktierung wird die Backrnittelmischung mit Hilfe einer Schneckenförderung in eine Walzenvorrichtung befördert, in der die Mischung verpreßt wird. Die Dosierung des zu kompaktierenden Materials kann mit Hilfe einer Dosierschnecke erfolgen. Über die Schneckendrehzahl, die üblicherweise zwischen 20 und 80 [Umdrehungen/min.] liegt, kann die Dosierung/Beschickung des Kompaktors beeinflußt werden.

Im Gegensatz zu anderen Granuliermethoden wie Sprühgranulation oder Feuchtgranulation wird bei dieser Methode trocken granuliert. Es resultieren hierbei sogenannte Schulpen. Durch Steuerung der Schneckenförderung, Walzendrehzahl, Walzenformen und Anpreßdruck kann der Durchsatz und die Produktqualität beeinflußt werden. Je nach Walzenform werden Pellets (Wellprofil der Walzen) oder Schulpen (Glattwalzen) erhalten, die dann z.B. in einer Siebmühle zerkleinert werden. Falls gewünscht kann der Anlage noch ein Verrunder nachgeschaltet werden.
Vorteil der Methode ist die hohe Schüttdichte. Desweiteren wird kein Wasserzusatz nötig und somit entfällt eine keine nachträgliche Trocknung.

Die Kompaktierung wird bei 15 bis 70 °C, vorzugsweise bei 40 bis 60 °C durchgeführt.

### Beispiele

### Beispiel 1

In einem Kompaktor der Fa. Hosokawa (Typ L 200/50 P), der mit Wellprofilwalzen bzw. konkaven Glattwalzen und einer zylindrisch/konischen Vorverdichterschnecke ausgerüstet war, wurde die Backmischung (1) der Tabelle 1 kompaktiert. Die Durchsatzleistung betrug 80 kg/h., die Anpreßkraft betrug 80 kN (Wellprofil 12 mm geschlossen) bzw. 60 kN (konkave Glattwalzen).

Die Produkte wurden in der Siebmühle FC 200, in die ein Riffelblech mit der Lochung 2 mm eingebaut war, vermahlen.

Es wurde ein granulares, staubfreies Backmittel erhalten.

**Tabelle 1**

| **Alle Angaben in Gew.-%** | | | |
|---|---|---|---|
| **Material** | **Backmittel für Brötchen (1)** | **Backmittel für freigeschobenes Weißbrot (2)** | **Backmittel für Toastbrot (3)** |
| Malzmehl | 20,0 | - | - |
| Malzextraktpulver | - | 25,0 | 10,0 |
| Dextrose | 30,0 | 10,0 | 10,0 |
| Guar Gum | 8,5 | 4,0 | 8,0 |
| C16-C18 Fettsäuretriglycerid (Edenor NHTI pflanzl.) | 5,0 | 8,0 | 5,0 |
| Emulgator (Lamegin DWP 1365) | - | 10,0 | - |
| Emulgator (Lamegin DW 3000) | - | - | 8,0 |
| Emulgator (Lamegin DWT 8000) | 8,0 | - | - |
| Amylase (Nutrilife AM 17) | 0,03 | 0,03 | - |
| Xylanase (Nutrilife CS 16) | 0,60 | 0,60 | - |
| Xylanase Compound (Nutrilife AS 10) | - | - | 1,0 |
| Ascorbinsäure | 0,20 | 0,20 | 0,25 |
| Natriumbicarbonat | - | 3,0 | 3,0 |
| Tetranatriumpyrophosphat | - | 2,0 | 2,0 |
| Mikrokristalline Cellulose (Avicel PH 302) | - | 10,0 | 12,0 |
| Lactose | _ | - | 10,0 |
| Gehärtetes Pflanzenfettfett (Cegepal V-FS) | - | - | 10,0 |
| Essigsäure | 1,0 | - | - |
| Natriumbicarbonat | 3,0 | - | - |
| Getrocknetes Weizenmehl | ad 100 | ad 100 | ad 100 |

### Vergleichsbeispiel V1

Eine Zusammensetzung gemäß Tabelle 1 Beispiel (1) wurde in einem Mischer der Firma Lödige homogenisiert. Es wurde ein pulvriges, stark staubendes Backmittel erhalten.

### Anwendungstechnische Prüfung

Jeweils 60 g der nach den Beispielen 1 und V1 erhaltenen Backmittel wurden zusammen mit 2000 g Mehl, 40 g Salz, 100 g Hefe und 1160 ml Wasser zu Schrippen verarbeitet. Der Teig wurde 6 min bei einer Teigtemperatur von 26 bis 28°C in einem Kemper Spiralkneter geknetet. Nach einer Teigruhe von 8 min erfolgte die Pressengare mit 12 min. Beurteilt wurde das Volumen der Schrippen nach der Endgare, wobei zum einen eine Normalgare (NG) mit 25 min und zum anderen eine Übergare (ÜG) mit 35 min durchgeführt wurde. In beiden Fällen wurden Volumina im Bereich von 4400 bis 4500 ml (NG) bzw. 4700 bis 4900 ml (ÜG) erhalten. Dies zeigt, dass mit den erfindungsgemäßen kompaktierten Backmitteln die gleichen Ergebnisse erzielt werden wie mit den Produkten des Stands der Technik.

### Beispiele 2 bis 6

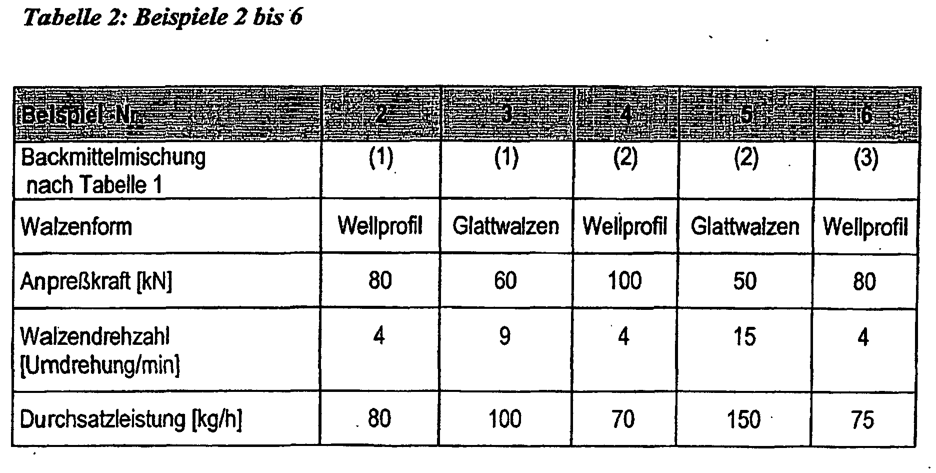

Die in durch Kompaktierung erhaltenen Backmittel 2 bis 6 waren granular und staubfrei. In der anwendungstechnischen Prüfung wurde mit den erfindungsgemäß kompaktierten Backmitteln die gleichen Ergebnisse erzielt wie mit Produkten des Standes der Technik.

## Patentansprüche

1. Verfahren zur Herstellung granulierter Backmittel, bei dem man Backrohstoffe mit einer Restfeuchte von weniger als 20 Gew.-% durch Kompaktierung in stückige Zubereitungen überführt, die
(a) 1 bis 90 Gew.-% Mehl bzw. kohlenhydrathaltige Rohstoffe,
(b) 0,05 bis 50 Gew.-% Emulgatoren,
(c) 0,5 bis 40 Gew.-% proteinhaltige Rohstoffe,
(d) 0,01 bis 5 Gew.-% Enzyme,
(e) 0,05 bis 5 Gew.-% Oxidationsmittel,
(f) 0,05 bis 5 Gew.-% Konservierungsmittel ,
(g) 0 bis 25 Gew.-% Lösungs- und/ oder Netzmittel,
(h) 0 bis 35 Gew.-% Milcherzeugnisse,
(i) 0 bis 20 Gew.-% pflanzlicher und/ oder tierischer Fette,
(j) 0 bis 10 Gew.-% Säuren,
(k) 0 bis 20 Gew.-% Füll-, Trenn- und Sprengmittel,
sowie gegebenenfalls weitere Hilfs- und Zusatzstoffe mit der Maßgabe enthalten, dass sich die Gewichtsanteile zu 100 Gew.-% ergänzen.

2. Verfahren nach Anspruch 1, **dadurch gekennzeichnet, dass** man die Kompaktierung bei Temperaturen im Bereich von 15 bis 70°C durchführt.

## Claims

1. A process for the production of granulated baking mixtures in which baking raw materials with a residual moisture content of less than 20% by weight are converted by compacting into particulate compositions containing
(a) 1 to 90% by weight of flour or carbohydrate-containing raw materials,
(b) 0.1 to 50% by weight of emulsifiers,
(c) 0.5 to 40% by weight of protein-containing raw materials,
(d) 0.01 to 5% by weight of enzymes,
(e) 0.05 to 5% by weight of oxidizing agents,
(f) 0.05 to 5% by weight of preservative,
(g) 0 to 25% by weight of solvent and/or wetting agent,
(h) 0 to 35% by weight of milk products,
(l) 0 to 20% by weight of vegetable and/or animal fats,
(j) 0 to 10% by weight of acids,
(k) 0 to 20% by weight of fillers, parting and disintegrating agents
and optionally other auxiliaries and additives, with the proviso that the percentages by weight add up to 100% by weight.

2. A process as claimed in claim 1, **characterized in that** compacting is carried out at temperatures of 15 to 70°C.

## Revendications

1. Procédé de production de produit de cuisson granulé, selon lequel on convertit des matières premières de cuisson ayant une humidité résiduelle inférieure à 20 % en poids, en préparations en morceaux par compactage, qui renferment
a) de 1 à 90 % en poids de farine ou de matières premières qui contiennent des hydrates de carbone,
b) de 0,05 à 50 % en poids d'agents émulsionnants,
c) de 0,5 à 40 % en poids de matières premières contenant des protéines,
d) de 0,01 à 5 % en poids d'enzymes,
e) de 0,05 à 5 % en poids d'agents d'oxydation,
f) de 0,05 à 5 % en poids d'agents conservateurs,
g) de 0 à 25 % en poids d'agents dissolvants et/ou d'humidification,
h) de 0 à 35 % en poids de produits lactés,
i) de 0 à 20 % en poids de graisses végétales et/ou animales,
j) de 0 à 10 % en poids d'acides,
k) de 0 à 20 % en poids de produits de charge, de produits de séparation et de produits d'éclatement,
ainsi qu'éventuellement d'autres adjuvants et additifs,
avec la précision que les proportions en poids se complètent à 100 % en poids.

2. Procédé selon la revendication 1,
**caractérisé en ce qu'**
on effectue le compactage à des températures dans la plage de 15 à 70°C.
